## Europäisches Patentamt

## European Patent Office

## Office européen des brevets

(19)

(11) Publication number: **0 257 005**
**B1**

# EUROPEAN PATENT SPECIFICATION

(12)

(45) Date of publication of the patent specification:
24.10.90

(51) Int. Cl.⁵: **B23B 29/04**

(21) Application number: 87850212.9

(22) Date of filing: 29.06.87

(54) Tool for chip removing machining.

(30) Priority: 06.08.86  SE 8603325

(43) Date of publication of application:
24.02.88 Bulletin 88/8

(45) Publication of the grant of the patent:
24.10.90 Bulletin 90/43

(84) Designated Contracting States:
DE FR GB IT SE

(56) References cited:
EP-A- 0 088 426
DE-A- 2 106 854
DE-B- 1 299 196
DE-U- 8 513 350
US-A- 3 775 818
US-A- 4 270 422
US-A- 4 599 923

VDI-ZEITSCHRIFT, vol. 122, no. 23/24, December 1980,
pages 1072-1075, Düsseldorf; "Bericht von der
Internationalen Werkzeugmaschinenausstellung
IMTS'80 in Chicago"

(73) Proprietor: SANDVIK AKTIEBOLAG,
S-811 81 Sandviken 1(SE)

(72) Inventor: Byström, Olof Lennart, Zinkgatan 1,
S-811 52 Sandviken(SE)
Inventor: Johansson, Sven-Erik Wilhelm,
Märgelvägen 52, S-802 26 Gävle(SE)

## Description

The present invention relates to a tool for chip removing machining and a blade arranged therein according to the precharacterizing parts of the independent claims 1 and 4, respectively. Such a tool and blade are known from DE-U 8 513 350. The tool comprises a holder, a planar, elongated blade and a cutting insert. The holder have a expandable securing part and head attached thereto comprising a longitudinaly extending first recess having bordering edge surfaces at least partly forming a dove-tail profile. The blade has a cutting insert site at a front surface thereof, an end surface, side surfaces and edge surfaces. The edge surfaces at least partly form a dove-tail profile. The blade is wedgingly urged towards a lower one of said bordering edge surfaces by means of tightening means.

In US-A 3 775 818 is shown a parting tool comprising a holder, a blade and an insert. The holder is provided with a clamping device which is adapted to clamp the blade in a direction transverse to the longitudinal direction of the blade and to simultaneously clamp the insert. That type of tool lacks a well defined stop in the longitudinal direction of the blade and demands close tolerances on the holder and the blade such to avoid tilting in the holder and therefore the tool is adapted for small cutting forces only.

In DE-U 8 513 350 is shown a parting tool comprising a holder having a recess in which an elongated blade is releasably secured, a portion of an upper edge of said blade being parallel with another edge surface thereof. A clamping device is arranged to clamp the holder in a direction oriented perpendicularly to said parallel edge surface portions. The clamping device is a clamping screw 7 that is located at a forward end of a clamp 9 integral with the remainder of the holder. Due to the fact that this clamp acts against an upper edge surface 16 parallel with an underneath edge surface 17 and located next to a vertical shoulder 20 only the axially forward portion of said clamp will be subject of bending into firm abutment with said upper edge surface. The result thereof will be that the rear end surface of said blade is not in firm abutment with a rear wall of the recess in which said blade is located thus making the blade susceptible to vibrations. Therefore, such tool will not be effectively useful for certain chip machining operation such as enlargement of slots in a workpiece.

One object of the present invention is to shape a tool and a blade such to obtain a stable and secure tool system.

Another object is to obtain a flexible tool system i.e. a tool wherein the blade is easily and quickly exchangeable regardless of the dimension thereof.

Another object is to obtain a tool system which is unsensitive to tolerance faults.

According to the present invention a tool of the foregoing kind which is adapted for use with an elongated blade, an insert, and a holder, is characterized in that the securing part is an expandable securing part, in that the first blade-receiving recess also terminates in the end surface of the blade, in that a groove is shaped in the planar bottom of the first blade-receiving recess, and in that a second recess is formed in the tool head which terminates in the bottom of the first recess and in the side surface, an upper part of said second recess facing the upper side of the head, and sloping, such that it forms an acute angle with the normal of the side surface, and in that a threaded bore arranged perpendicularly to the side surface terminates in the middle of the second recess and receives a screw which is in threaded engagement with a wedge, said wedge having surfaces which form equal angles with the center line of the bore and said surfaces co-operating with the upper sloping part of the second recess and the second section of the second edge surface of the blade, respectively, in order to force one edge surface of the blade against one border surface of the first recess.

According to a preferable feature one surface of the wedge and one border surface of the first blade receiving recess are provided with projections arranged at respective end of respective surfaces.

Yet another preferable feature of the present invention is to provide the second recess with a depth which is at least twice the thickness of the blade and in that the thickness of the wedge is less than the depth of said second recess and larger than the thickness of the blade.

The present invention also provides a blade provided to carry an insert and to be clamped in a holder comprising an insert site, plane-parallel side surfaces, a front surface, an end surface and edge surfaces, said edge surfaces having at least partly dove-tail profiles, whereby a first section of one edge surface forming an acute angle with the other edge surface and a second section of said one edge surface arranged between said first section and the end surface being mainly parallel with the second edge surface characterized in that said acute angle is between 10 to 20 degrees and in that a first extension line of the first section which is parallel with the side surfaces and a second extension line of the second section which also is parallel with the side surfaces converge in a direction from the front surface to the end surface.

The invention will be more closely described hereinafter in connection with the appended drawings.

Fig. 1 shows a tool according to the invention in a side view.

Fig. 2 shows the tool in a top view.

Fig. 3 shows a cross-section according to the line III-III in Fig. 1.

Fig. 4 shows an end view of the tool.

Fig. 5 shows an exploded view of the tool.

In the figures is shown a parting tool 10 for chip removing machining. The tool comprises a holder or adapter 11, a blade 12 and an insert 13.

The adapter has an, in itself previously known, expandable securing part 14 arranged to be clamped in a machine. The securing part is more closely described in US-A 4 270 422 which is hereby incorporated with the description. The part 14 connects to a head 15 which extends forwardly and sidewardly relative to the part 14. The head has a planar upper side 15′, a front surface 16, a side surface 17, an end surface 18, a lower side and a backed off surface.

A first recess 19 is formed in the head, which extends along the entire side surface 17 and terminates in the front surface 16 and the end surface. The recess 19 is bordered by two edge surfaces 20, 21 and a bottom 22. The edge surfaces 20, 21 form a dove-tail profile, i e they converge in direction perpendicularly from the bottom 22. The enclosed angle is about 10 to 40 degrees. The lower edge surface 20 is mainly parallel with the center line CL of the tool 10. The upper edge surface 21 forms an acute angle $\alpha$ with the edge surface 20 in direction towards the securing part in the plane of the side surface 17, i e rearwardly. The angle $\alpha$ is chosen within the interval 10 to 20 degrees, preferably about 15 degrees. The edge surface 20 is preferably provided with a rear and a front lip for heel and toe abutment, respectively, for the blade. The bottom 22 is planarly shaped and has a groove 23 arranged along the entire length of the bottom. The groove 23 reduces the risk for tilting of the blade in the recess and may in certain cases be used for transference of cooling liquid.

A second recess 24 is formed in the head 15. The recess 24 is mainly square and terminates in the side surface 17 and in the recess 19. The recess 24 extends a distance $\underline{a}$ in the depth direction from the plane of the side surface 17. The distance $\underline{a}$ is at least twice the thickness $\underline{c}$ of the blade 12. The recess 24 is placed such that it is closer to the end surface 18 than to the front surface 16. The upper part of the recess 24, closest to the upper side 15′, forms an internal acute angle with the upper side. The lower part of the recess, closest to the lower side of the head, is mainly parallel with the upper side 15′. Said parts of the recess are connected by two guiding surfaces which are mainly parallel with the plane of the front surface 16. The recess 24 has corners which are rounded off due to durability reasons. A bore 25 is formed in the head 15. The bore 25 is perpendicular to the plane of the side surface 17 and terminates in the middle of the recess 24 and in the backed off surface of the head. The bore is threaded from the recess 24 and a distance into the head whereafter it has been expanded to provide space for a key tool.

The threaded part of the bore 25 is arranged to receive one end of a stretching screw 26, i e a screw whose ends 27, 28 are threaded mutually opposite.

The second end 28 of the screw 26 will engage with a threaded bore in a wedge 29. The wedge 29 consists of two mainly planar and parallel side surfaces, two mainly planar and parallel guiding surfaces and two towards the head 15 converging wedge surfaces 30, 31. The wedge surfaces converge towards a point on the center line CL$_2$. A lower wedge surface 30 is provided with transversely extending ridges 32 provided to reduce the tolerance sensitivity of the wedge. The corner portions of the wedge are chamfered. The upper wedge surface 31 is provided to engage with and to slide along the upper sloping part of the second recess 24. The thickness of the wedge is less than the depth $\underline{a}$ of the recess 24 but larger than the thickness $\underline{c}$ of the blade 12.

The blade 12 comprises two mainly plane-parallel side surfaces, a front surface, an end surface 33 and two edge surfaces 34, 35. A cutting insert site is formed in the front end of the blade to receive an insert 13. The insert and the insert site are more closely described in the Swedish patent application No. 8601533-6 (published on 08.10.87), which is hereby incorporated with the description. The lower edge surface 34 is roof-shaped, i e has the shape of an inverted V, and is arranged parallel with the center line CL$_1$ of the tool. The upper edge surface 35 is partly at 35a parallel with the centerline CL$_1$ while a first portion 35B forms an acute angle $\beta$ with the lower edge surface 34 in such a way that the portion 35B converges rearwardly towards the edge surface 34 in direction towards the end surface 33. The angle $\beta$ is chosen within the interval 10 to 20 degrees, preferably about 15 degrees. The angle $\beta$ shall be about 0.5 degrees less than the angle $\alpha$. The edge surface 35 is along a second section 35C arranged mainly parallel with the edge surface 34. Also the upper edge surface 35 is roof-shaped such that the outer edges of the edge surfaces 34,35 facing away from the recess 19 form an acute angle with each other.

The second section 35C is in the height direction of the blade arranged at a distance $\underline{b}$ from the rear end of the first section 35B. The distance $\underline{b}$ is about 40 to 60 percent of the largest height of the blade. The section 35B transites into the section 35C via an edge perpendicular to the lower edge surface 34 and a rounded off corner. An extension line of the section 35B does not intersect the section 35C in any point but converges in direction rearwardly towards an extension line of the section 35C.

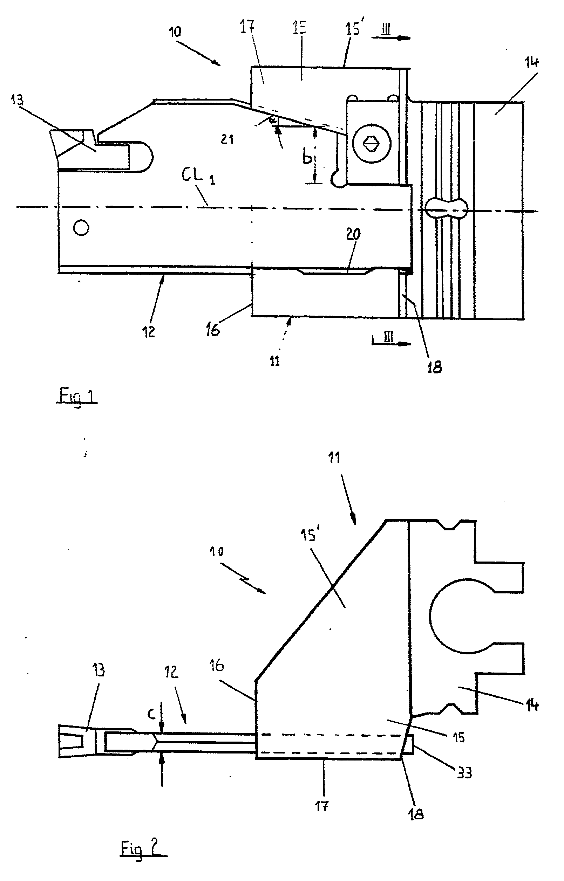

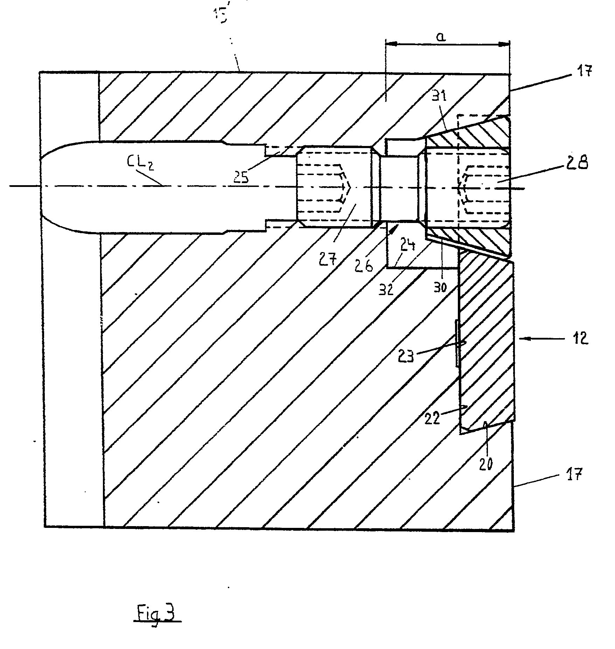

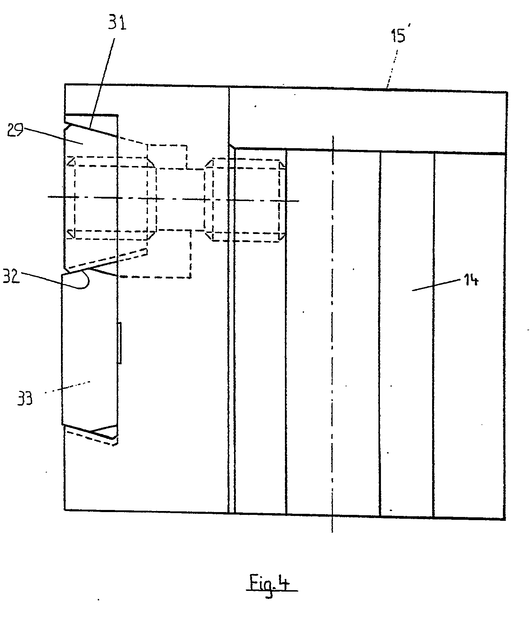

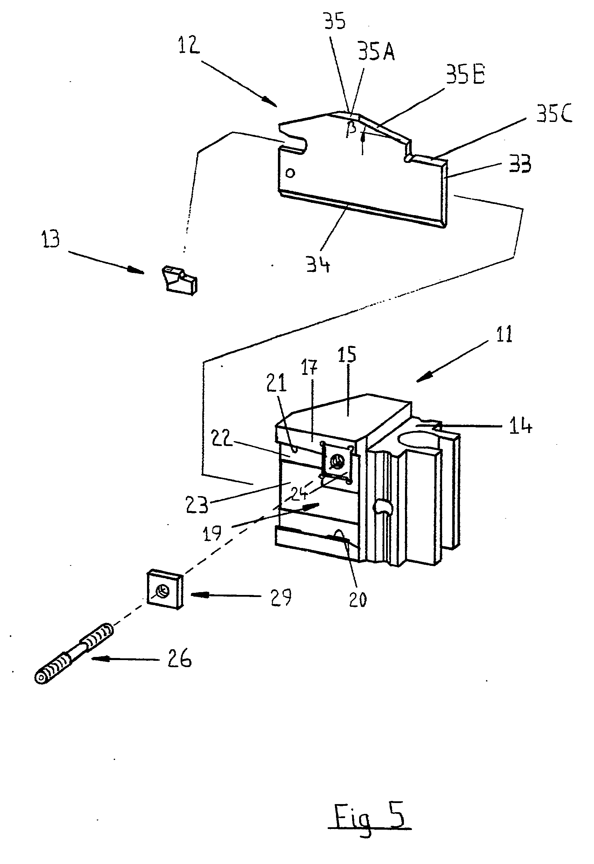

When mounting of the tool the ends 27, 28 of the screw 26 are threaded into the bore 25 of the head and into the bore of the wedge 29, respectively, without tightening too much. The wedge 29 is thereby in an open position. The blade 12, provided with an insert, is thereafter inserted from left in Fig. 1 and into the recess 19 in the head. The second section 35C of the blade may therefore slidingly pass the lower part of the wedge. As the enclosed angle $\alpha$ between the edge surfaces 20, 21 is less than the angle $\beta$ between the edge surface 34 and the second section 35B of the edge surface 35 the blade will be wedged up on the front part of the recess, i e at the intersections of the edge surfaces 20, 21 and the front surface 16. In this position the wedge is tightened by the screw from one of the possible two directions whereby the upper part 31 of the wedge will contact with the upper part of the second recess 24 while the ridges 32 on the lower part 30 of the wedge will contact the second section 35C of the blade and thus the blade will be forced downwardly towards the edge surface 20 and inwardly towards the bottom 22. Bending moment on the screw 26 is avoided by the surfaces 31 and 32 forming equal angles with the center line CL$_2$ of the bore 25, and therefore the screw will only be loaded with tensile stress.

The edge surface 21 in the first recess and the first section 35B of the blade constitute axial stop means, i e prevent unwanted insertion of the blade into the first recess. The ridges 32 of the wedge 29 and the second section 35C prevent tilting of the blade in the recess. The blade is thus wedged up in the holder in the longitudinal direction of the blade and in at least one direction perpendicular thereto, i e perpendicular to the side surface 17, at two from each other spaced contact places. The contact places are defined by the front contact place between the surfaces 34, 35B and the surfaces 20, 21 and the other contact place is defined by the rear contact place between the surfaces 34, 35C and the ridges 32.

The invention thus relates to a tool for chip removing machining through which shape a flexible and stable tool system is obtained.

## Claims

1. A tool for chip removing machining comprising an elongated blade (12), an insert (13), and a holder (11), said elongated blade (12) being provided to carry the insert (13) and to be clamped in the holder (11) having a securing part and a head (15) comprising a longitudinally extending recess (19) having bordering edge surfaces (20, 21) at least partly forming a dove-tail profile, said blade having plane-parallel side surfaces, a front surface, an end surface (33), an insert site at the front surface, and edge surfaces (34, 35), said edge surfaces having at least partly dove-tail profiles, whereby a first section (35B) of one edge surface forms an acute angle with the other edge surface (34) such that they converge in a plane parallel to the side surfaces, and whereby a second section (35C) of said one edge surface arranged between said first section and the end surface (33) is mainly parallel with the second edge surface (34) in a plane parallel to the side surfaces; the head (15) of the holder comprising a planar upper side (15′), a planar front surface (16), a side surface (17), an end surface (18), a lower side and a backed off surface; the first recess (19) extending along the side surface (17) and terminating in the front surface, said recess (19) having a mainly planar bottom (22), characterized in that the securing part is an expandable securing part, in that the first recess also terminates in the end surface (33), in that a groove (23) is shaped in the planar bottom (22) of the first recess (19), and in that a second recess (24) is formed in the tool head (15) which terminates in the bottom (22) of the first recess (19) and in the side surface (17), an upper part of said second recess facing the upper side (15′) of the head, and sloping, such that it forms an acute angle with the normal of the side surface (17), and in that a threaded bore (25) arranged perpendicularly to the aide surface (17) terminates in the middle of the second recess (24) and receives a screw (26) which is in threaded engagement with a wedge (29), said wedge having surfaces (31, 32) which form equal angles with the center line (CL₂) of the bore (25) and said surfaces co-operating with the upper sloping part of the second recess and the second section (35C) of the second edge surface (35) of the blade, respectively, in order to force one edge surface (34) of the blade against one border surface (20) of the first recess.

2. Tool according to claim 1, characterized in that one surface (30) of the wedge and one border surface (20) of the first recess (19) are provided with projections arranged at respective end of respective surface (30, 20).

3. Tool according to claim 1 or 2, characterized in that the second recess (24) has a depth a which is at least twice the thickness c of the blade (12) and in that the thickness of the wedge is less than the depth a and larger than the thickness c.

4. Blade provided to carry an insert and to be clamped in a holder comprising an insert site, plane-parallel side surfaces, a front surface, an end surface (33) and edge surfaces (34, 35), said edge surfaces having at least partly dove-tail profiles, a first section (35B) of one edge surface (35) forming an acute angle (β) with the other edge surface (34) and a second section (35C) of said one edge surface (35) arranged between said first section (35B) and the end surface (33) being mainly parallel with the second edge surface (34), characterized in that the acute angle (β) is between 10 to 20 degrees and in that a first extension line of the first section (35B) which is parallel with the side surfaces and a second extension line of the second section (35C) which also is parallel with the side surfaces converge in a direction from the front surface to the end surface.

## Patentansprüche

1. Werkzeug für die spanabhebende Bearbeitung mit einem länglichen Blatt (12), einem Einsatz (13) und einem Halter (11), wobei das längliche Blatt (12) dafür vorgesehen ist den Einsatz (13) zu halten und in dem Halter (11) eingeklemmt zu werden, welcher einen Sicherungsteil und einen Kopf (15) hat mit einer sich in Längsrichtung erstreckenden Aussparung (19), die Grenzrandflächen (20, 21) hat, welche zumindest teilweise ein Schwalbenschwanzprofil bilden, wobei das Blatt planparallele Seitenflächen, eine Vorderfläche, eine Hinterfläche (33), einen Platz für den Einsatz an der Vorderfläche und Randflächen (34, 35) hat, wobei die Randflächen zumindest teilweise Schwalbenschwanzprofil haben, wobei ein erster Abschnitt (35B) einer Randfläche einen spitzen Winkel mit der anderen Randfläche (34) derart bildet, daß sie in einer Ebene parallel zu den Seitenflächen konvergieren, und wobei ein zweiter Abschnitt (35C) der einen Randfläche, welcher zwischen dem ersten Abschnitt und der Endfläche (33) angeordnet ist, im wesentlichen parallel zu der zweiten Randfläche (34) in einer Ebene parallel zu den Seitenflächen ist, wobei der Kopf (15) des Halters eine ebene obere Seite (15′), eine ebene Vorderfläche (16), eine Seitenfläche (17), eine hintere Fläche (18), eine untere Seite und eine Abstützseite aufweist, und wobei die erste Aussparung (19) sich entlang der Seitenfläche (17) erstreckt und an der Vorderfläche endet, wobei die Aussparung (19) einen im wesentlichen ebenen Grund (22) hat, dadurch gekennzeichnet, daß das Sicherungsteil ein dehnbares Sicherungsteil ist, daß die erste Aussparung ebenfalls in der hinteren Fläche (33) endet, daß eine Nut (23) in den ebenen Grund der ersten Aussparung (19) geformt ist, und daß eine zweite Aussparung (24) in dem Werkzeugkopf (15) ausgebildet ist, welche im Boden (22) der ersten Aussparung (19) und in der Seitenfläche (17) endet, wobei ein oberer Teil der zweiten Aussparung der oberen Seite (15') des Kopfes gegenüberliegt und so geneigt ist, daß er einen spitzen Winkel mit der Normalen der Seitenfläche (17) bildet und daß eine Gewindebohrung (25), welche senkrecht zur Seitenfläche (17) angeordnet ist, in der Mitte der zweiten Vertiefung (24) endet und eine Schraube (26) aufnimmt, welche in Schraubeingriff mit einem Keil (29) steht, wobei der Keil Oberflächen (31, 32) hat, die gleiche Winkel mit der Mittellinie (CL2) der Bohrung (25) bilden und die Seitenflächen mit dem oberen abfallenden Teil der zweiten Aussparung bzw. dem zweiten Abschnitt (35C) der zweiten Randfläche (35) des Blattes zusammenwirken, um eine Randfläche (34) des Blattes gegen eine Grenzfläche (20) der ersten Aussparung zu drücken.

2. Werkzeug nach Anspruch 1, dadurch gekennzeichnet, daß eine Oberfläche (30) des Keiles und eine Grenzfläche (20) der ersten Aussparung (19) mit Vorsprüngen versehen sind, welche an entsprechenden Enden der jeweiligen Oberfläche (30, 20) angeordnet sind.

3. Werkzeug nach Anspruch 1 oder 2, dadurch gekennzeichnet, daß die zweite Aussparung (24) eine Tiefe hat, welche zumindest zweimal der Dicke c des Blattes (12) entspricht und daß die Dicke des Keiles weniger als die Tiefe a beträgt und größer als die Dicke c ist.

4. Blatt, welches dafur vorgesehen ist, einen Einsatz zu haltern und welches in einem Halter eingeklemmt werden soll, mit einem Platz für einen Einsatz, planparallelen Seitenflächen, einer Vorderfläche, einer hinteren Fläche (33) und Randflächen (34, 35), wobei die Randflächen zumindest teilweise Schwalbenschwanzprofil haben, einem ersten Abschnitt (35B) einer der Randflächen (35), welcher einen spitzen Winkel (ß) mit der anderen Randfläche (34) bildet und einem zweiten Abschnitt (35C) der einen Randfläche (35), welcher zwischen dem ersten Abschnitt (35B) und der hinteren Fläche (33) angeordnet ist, welcher in etwa parallel zu der zweiten Randfläche (34) liegt, dadurch gekennzeichnet, daß der spitze Winkel (ß) zwischen 10 und 20° liegt und daß eine erste Verlängerungslinie des ersten Abschnittes (35B), welche parallel zu den Seitenflächen ist, und eine zweite Verlängerungslinie des zweiten Abschnittes (35C), welche ebenfalls parallel zu den Seitenflächen ist, in Richtung von der Vorderfläche zur hinteren Fläche konvergieren.

**Revendications**

1. Un outil destiné à l'usinage par enlèvement de copeaux comprenant une lame allongée (12), un insert (13) et un support (11), ladite lame allongée (12), destinée à porter l'insert (13) et à être serrée dans le support (12), comportant une partie de fixation et une tête (15) comprenant un évidement s'étendant longitudinalement (19) comportant des surfaces de bord formant limite (20, 21) constituant au moins partiellement un profil en queue d'aronde, ladite lame possédant des surfaces latérales situées dans des plans parallèles, une surface avant, une surface d'extrémité (33), un emplacement d'insert sur la surface avant, et des surfaces de bord (34, 35), lesdites surfaces de bord constituant au moins partiellement des profils en queue d'aronde, une première section (35B) d'une surface de bord formant un angle aigu avec l'autre surface de bord (34) de manière telle qu'elles convergent dans un plan parallèle aux surfaces latérales, et une deuxième section (35C) de ladite première surface de bord, agencée entre ladite première section et la surface d'extrémité (33), étant principalement parallèle à la deuxième surface de bord (34) dans un plan parallèle aux surfaces latérales; la tête (15) du support comprenant un côté supérieur plan (15'), une surface avant plane (16), une surface latérale (17), une surface d'extrémité (18), un côté inférieur et une surface détalonnée; le premier évidement (19) s'étendant le long de la surface latérale (17) et se terminant dans la surface avant, ledit évidement (19) possédant un fond principalement plan (22), caractérisé en ce que la partie de fixation est une partie de fixation extensible, en ce que le premier évidement se termine aussi dans la surface d'extrémité (33), en ce qu'une rainure (23) est formée dans le fond plat (22) du premier évidement (19) et en ce qu'un deuxième évidement (24) est formé dans la tête d'outil (15) qui se termine dans le fond (22) du premier évidement (19) et dans la surface latérale (17), une partie supérieure dudit deuxième évidement étant tournée vers le côté supérieur (15') de la tête et inclinée, de façon à former un angle aigu avec la normale à la surface latérale (17), et en ce qu'un alésage fileté (25), disposé perpendiculairement à la surface latérale (17) se termine au milieu du deuxième évidement (24) et reçoit une vis (26) qui est en contact par vissage avec une cale (29), ladite cale possédant des surfaces (31, 32) qui forment des angles égaux avec la ligne centrale (CL₂) de l'alésage (25) et en ce que lesdites surfaces coopérant avec la partie supérieure inclinée du deuxième évidement et la deuxième section (35C) de la deuxième surface de bord (35) de la lame, respectivement, afin de forcer une surface de bord (34) de la lame contre une surface de limite (20) du premier évidement.

2. Outil selon la revendication 1, caractérisé en ce qu'une surface (30) de la cale et une surface de limite (20) du premier évidement (19) comportent des saillies disposées à une extrémité respective de la surface respective (30, 20).

3. Outil selon la revendication 1 ou 2, caractérisé en ce que le deuxième évidement (24) possède une profondeur qui est au moins deux fois la profondeur c de la lame (12) et en ce que l'épaisseur de la cale est inférieure à la profondeur et est supérieure à l'épaisseur c.

4. Lame destinée à porter un insert et à être serrée dans un support comprenant un emplacement d'insert, des surfaces latérales situées dans des plans parallèles, une surface avant, une surface d'extrémité (33) et des surfaces de bord (34, 35), lesdites surfaces de bord constituant au moins partiellement des profils en queue d'aronde, une première section (35B) une surface de bord (35) formant un angle aigu (ß) avec l'autre surface de bord (34) et une deuxième section (35C) de ladite première surface de bord (35), disposée entre ladite première section (35B) et la surface d'extrémité (33), étant principalement parallèle à la deuxième surface de bord (34), caractérisée en ce que l'angle aigu (ß) est compris entre 10 et 20 degrés et en ce qu'une première d'extension de la première section (35B) qui est parallèle aux surfaces latérales et une deuxième ligne d'extension de la deuxième section (35C) qui est également parallèle aux surfaces latérales convergent dans une direction à partir de la surface avant vers la surface d'extrémité.

EP 0 257 005 B1

Fig 1

Fig 2

EP 0 257 005 B1

Fig. 3

Fig. 4

Fig 5